# EUROPEAN PATENT SPECIFICATION

(11) **EP 0 708 542 B1**
(45) Date of publication and mention of the grant of the patent: **17.12.2003**
(21) Application number: 95307185.9
(22) Date of filing: 11.10.1995
(51) Int. Cl.: H04J 3/08, H04L 12/437, H04Q 11/04

(54) **Generalized deterministic squelching in a ring transmission system**
Allgemeine vorbestimmte Stummschaltung in einem Ring-Übertragungssystem
Circuit de silencieux généralisé et déterministe pour un système de transmission en forme d'anneau

(30) Priority: 19.10.1994 US 325727
(43) Date of publication of application: 24.04.1996
(73) Proprietor: AT&T Corp., New York, NY 10013-2412 (US)
(72) Inventor: Kremer, Wilhelm, Andover, Massachusetts 01810 (US)
(74) Representative: Buckley, Christopher Simon Thirsk

(56) References cited:
- EP-A- 0 590 872
- CA-A- 2 065 471

## Description

This invention relates to methods for use with a predetermined ring node of a plurality of ring nodes in a ring transmission system, and to ring nodes.

It has become increasingly important to maintain communications connectivity in the presence of transmission system failures. To this end, bidirectional ring transmission systems have been proposed that heal communications circuits in the presence of equipment failure, fiber cuts, and ring node failures. Some bidirectional line-switched ring arrangements employ a deterministic "squelching" method to eliminate or block communications circuits terminated in a failed ring node to avoid undesirable misconnections. The squelching is performed by the switching ring nodes adjacent to the failed ring nodes. Although quite satisfactory for simple bidirectional communications circuits, this known squelching method cannot be extended to cover other types of circuits, for example, unidirectional circuits with various combinations multiple sources, multiple drops, and/or multiple broadcasts.

In CA-A-2065491 misconnections between communications circuits in a bidirectional line-switched ring transmission system are essentially eliminated by deterministically squelching in adjacent ring nodes, i.e., loop-back-switching nodes, communications circuits terminated in failed ring nodes in the ring transmission system. The deterministic squelching is realized by provisioning the ring nodes with all active communications circuits including those passing through the node which are terminated in other ring nodes in the bidirectional line-switched ring transmission system. Then, when one or more adjacent ring nodes fail, all active communications circuits terminated in those failed ring nodes are squelched in the adjacent ring nodes, i.e., in the loop-back-switching ring nodes.

In EP-A-0590872 the problems related to inefficient universal communications circuit presence and of lack of bandwidth unprotected by ring switching in a bidirectional line-switched transmission system are overcome by selectively switching, in accordance with the same rules governing the set-up and take down procedures of full line-switching, only that portion of the bandwidth of the particular line which has been provisioned to be ring-switched. The remaining bandwidth can be left unprotected or path-switched on a communications-circuit-by-communications-circuit basis, thereby, for the first time. line-switched ring functionality is combined with path-switched ring functionality in the same ring transmission system. Furthermore, another degree of switching freedom is achieved in a four-optical-fiber bidirectional line-switched ring transmission system by selectively span-switching, but not ring-switching, specific bandwidth on the line. To this end, communications circuit provisioning information is provided in the ring nodes as to whether a particular communications circuit should be line switched or not and. if not. whether it should be path-switched, span-switched or not switched. i.e.. left unprotected. Thus, a determination can be made on a communications-circuit-by-communications-circuit basis whether an individual communications circuit on the ring should be protection switched and, if so, the type of switching to be effected.

According to one aspect of this invention there is provided a method as claimed in claim 1.

According to another aspect of this invention there is provided a ring node as claimed in claim 7.

### Brief Description of the Drawing

In the drawing:
FIG. 1 shows, in simplified block diagram form, a bidirectional line-switched ring transmission system including ring nodes incorporating the invention;
FIG. 2 shows, in simplified block diagram form, details of a ring node including an illustrative example of the invention;
FIG. 3 shows, in simplified block diagram form, details of a squelcher used in the ring node of FIG. 2;
FIG. 4 shows, in simplified block diagram form, details of an AIS insert unit employed in the squelcher of FIG. 3;
FIG. 5 is a flow chart illustrating the squelch operation of controller 205 of FIG. 2; and
FIGs. 6-22 illustrate examples of the generalized squelching operations.

### Detailed Description

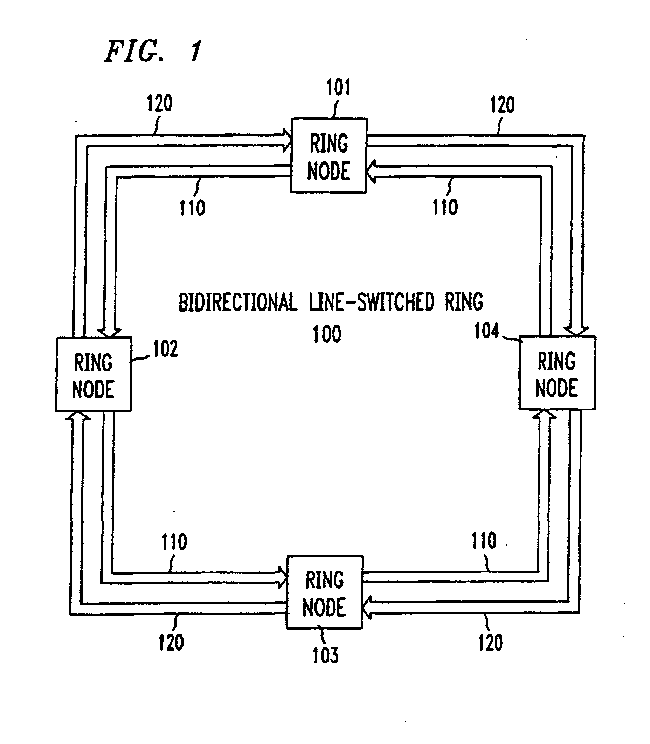

FIG. 1 shows, in simplified form, bidirectional line-switched ring transmission system 100, which for brevity and clarity of exposition is shown as including only ring nodes 101 through 104, each incorporating an illustrative example of the invention. Ring nodes 101 through 104 are interconnected by transmission path 110 in a counterclockwise direction and by transmission path 120 in a clockwise direction. In this example, transmission paths 110 and 120 are comprised of optical fibers and each could be comprised of a single optical fiber or two (2) optical fibers. That is, bidirectional line-switched ring transmission system 100 could be either a two (2) optical fiber or a four (4) optical fiber system. In a two (2) optical fiber system, each of the fibers in transmission paths 110 and 120 includes service bandwidth and protection bandwidth. In a four (4) optical fiber system, each of transmission paths 110 and 120 includes an optical fiber for service bandwidth and a separate optical fiber for protection bandwidth. Such bidirectional line-switched ring transmission systems are known. In this example, transmission of digital signals in the SONET digital signal format is assumed. However, it will be apparent that the invention is equally applicable to other digital signal formats, for example. the CCITT synchronous digital hierarchy (SDH) digital signal formats. In this example. it is assumed that an optical OC-N SONET digital signal format is being utilized for transmission over transmission paths 110 and 120. The SONET digital signal formats are described in a Technical Advisory entitled "Synchronous Optical Network (SONET) Transport Systems: Common Generic Criteria", TA-NWT-000253, Bell Communications Research. Issue 6. September 1990.

It is noted that requests and acknowledgments for protection switch action are transmitted in an automatic protection switch ("APS") channel in the SONET overhead accompanying the protection bandwidth on each of transmission paths 110 and 120. The APS channel, in the SONET format, comprises the K 1 and K2 bytes in the SONET overhead of the protection bandwidth. The K1 byte indicates a request of a communications circuit for switch action. The first four (4) bits of the K1 byte indicate the switch request priority and the last four (4) bits indicate the ring node identification (ID). The K2 byte indicates an acknowledgment of the requested protection switch action. The first four (4) bits of the K2 byte indicate the ring node ID and the last 4 bits indicate the action taken. For purposes of this description, a "communications circuit" is considered to be a SONET STS-3 digital signal having its entry and exit points on the ring.

Each of ring nodes 101 through 104 comprises an add-drop multiplexer ("ADM"). Such add-drop multiplexer arrangements are known. For generic requirements of a SONET based ADM see the Technical Reference entitled "SONET ADD-DROP Multiplex Equipment (SONET ADM) GENERIC CRITERIA", TR-TSY-000496, Issue 2. September 1989, Supplement 1, September 1991, Bell Communications Research. In this example, the ADM operates in a transmission sense to pass signals through the ring node, to add signals at the ring node, to drop signals at the ring node, to bridge signals during a protection switch and to loop-back-switch signals during a protection switch at the ring node.

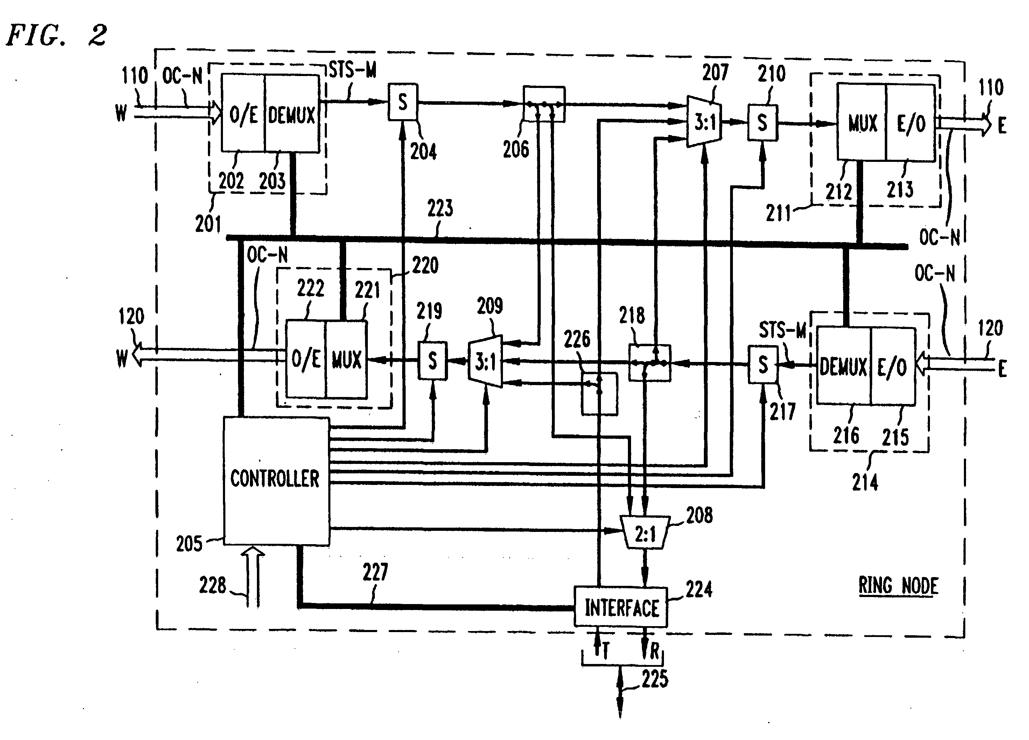

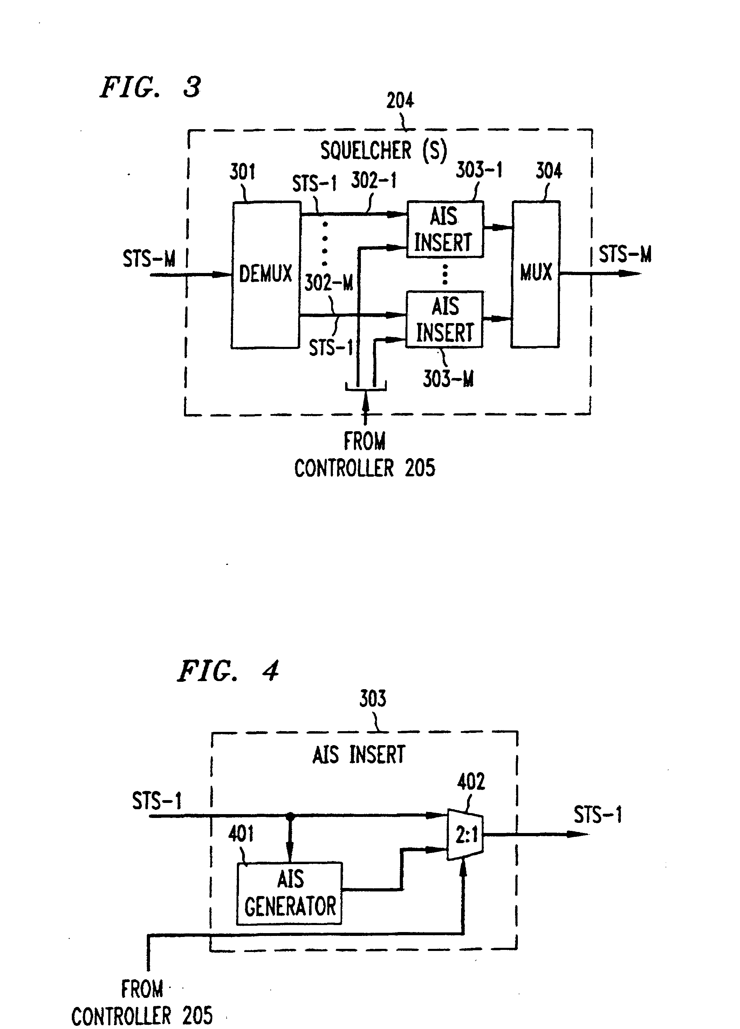

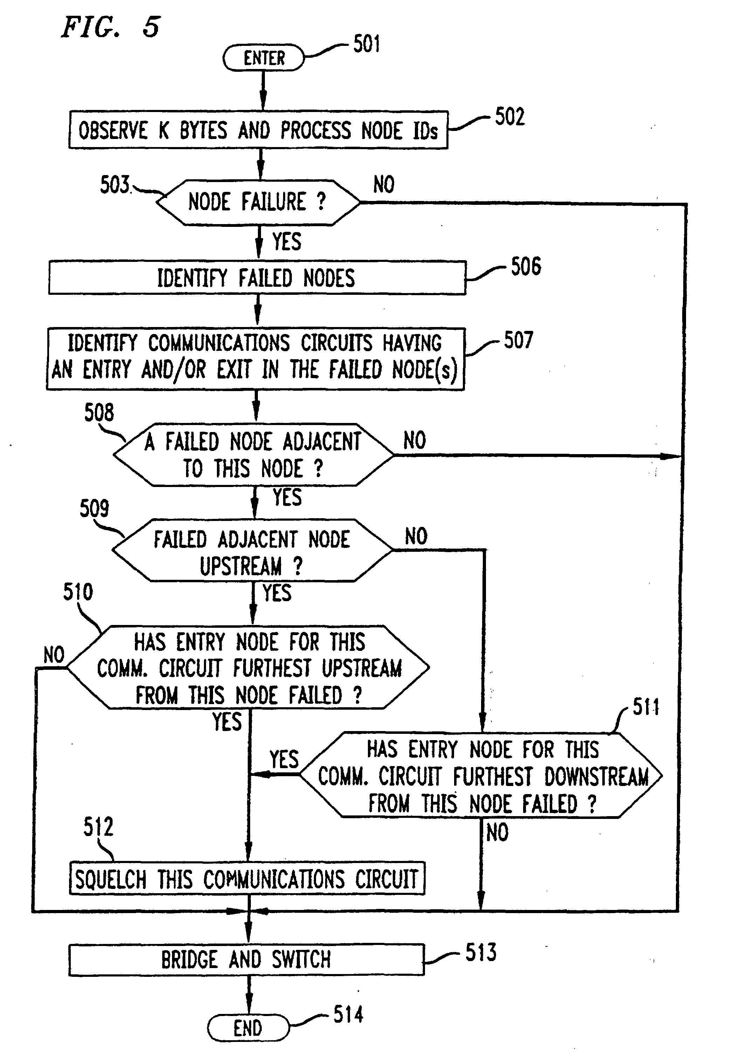

FIG. 2 shows, in simplified block diagram form, details of ring nodes 101 through 104, including an embodiment of the invention. In this example, a west (W)-to-east (E) digital signal transmission direction is assumed in the service bandwidth and the protection bandwidth on transmission path 110. It will be apparent that operation of the ring node and the ADM therein would be similar for an east (E) - to - west (W) digital signal transmission direction in the service bandwidth and the protection bandwidth on transmission path 120. Specifically, shown is transmission path 110 entering the ring node and supplying an OC-N SONET optical signal to receiver 201, where N could be, for example. 12 or 48. Receiver 201 includes an optical/electrical (O/E) interface 202 and a demultiplexer (DEMUX) 203, which yields at least one (1) STS-M SONET digital signal. Such O/E interfaces and demultiplexers are known. In this example, M is assumed to be three (3) and N is greater than M. The STS-M signal output from DEMUX 203 is supplied to squelcher (S) 204 which under control of controller 205 controllably squelches, i.e., blocks. particular incoming communications circuits by inserting an alarm indication signal (AIS), as described below. Details of squelcher (S) 204 are shown in FIGs. 3 and 4 and its operation is described below. Thereafter, the STS-M signal, squelched or otherwise, is supplied to broadcast element 206. A broadcast element replicates the STS-M signal supplied to it and supplies the replicated signals as a plurality of individual outputs. Such broadcast elements are known. Broadcast element 206 generates three identical STS-M signals and supplies one STS-M signal to an input of 3:1 selector 207, a second STS-M signal to an input of 2:1 selector 208 and a third STS-M signal to an input of 3:1 selector 209. An STS-M signal output from 3:1 selector 207 is supplied to squelcher (S) 210, which is identical to squelcher (S) 204. Squelcher (S) 210 is employed, under control of controller 205, to squelch particular outgoing communications circuits. The STS-M signal output from squelcher (S) 210 is supplied to transmitter 211 and, therein, to multiplexer (MUX) 212. The output of MUX 212 is an electrical OC-N digital signal, which is interfaced to transmission path 110 via electrical/optical (E/O) interface 213. Such multiplexers (MUXs) and electrical/optical (E/O) interfaces are well known.

Similarly, in the east (E) - to - west (W) direction an OC-N optical signal is supplied via transmission path 120 to receiver 214 and, therein, to optical/electrical (O/E) interface 215. In turn, demultiplexer (DEMUX) 216 yields a STS-M signal which is supplied via squelcher (S) 217 to broadcast element 218. Broadcast element 218 replicates the STS-M signal into a plurality of identical STS-M signals, in this example, three (3). One STS-M signal is supplied to an input of 3:1 selector 207, a second STS-M signal is supplied to an input of 2:1 selector 208 and a third STS-M signal is supplied to an input of 3:1 selector 209. An output from 3:1 selector 209 is supplied via squelcher (S) 219 to transmitter 220. In transmitter 220, multiplexer (MUX) 221 multiplexes the STS-M into an electrical OC-N and, then, electrical/optical (E/O) interface 222 supplies the optical OC-N signal to transmission path 120.

Controller 205 operates to effect the deterministic squelching of communications circuits. Controller 205 communicates with receivers 201 and 214 and transmitters 211 and 220 via bus 223 and with interface 224 via bus 227. Specifically, in this illustrative example, controller 205 monitors the incoming digital signals to determine loss-of-signal, SONET format K bytes and the like. Additionally, controller 205 causes the insertion of appropriate K byte messages for protection switching purposes, examples of which are described below. To realize the desired deterministic squelching of the communications circuits, controller 205 may be advantageously provisioned via bus 228 with the identities ("IDs") of all the active communications circuits in the ring node. These include those communications circuits passing through the ring node. as well as. those communications circuits being added and/or dropped at the ring node. The identities of all the ring nodes in bidirectional line-switched ring 100 may also be provisioned to controller 205. However. in-band signaling may also be used to supply ring nodes 101 through 104 with the identities of all the ring nodes in bidirectional line-switched ring 100 and the identities of communications circuits active in the ring node. In this scheme, control signals are embedded in the data stream itself. Alternatively. such identification could also be made using a central controller at some remote location to the ring, and the results forwarded to each ring node 101 through 104. The squelching of communications circuits under control of controller 205 to effect the invention is described below.

Interface 224 is employed to interface to a particular duplex link 225 and could include any desired arrangement. For example, interface 224 could include a DS3 digital signal interface to a DSX, a STS-1E (electrical) SONET digital signal interfacing to a DSX, an optical extension interface to an OC-N SONET optical signal or the like. Such interface arrangements are known. Specifically, a signal (R) to be dropped at the ring node is supplied to interface 224 via 2:1 selector 208, under control of controller 205, from either broadcast element 206 or broadcast element 218. In turn, interface 224 supplies the appropriate signal to duplex link 225. A signal (T) to be added at the ring node is supplied from duplex link 225 to interface 224 where it is converted to the STS-M digital signal format, if necessary. The STS-M digital signal is then supplied to broadcast element 226 where it is replicated. The replicated STS-M digital signals are supplied by broadcast element 226 to an input of 3:1 selector 207 and an input of 3:1 selector 209. In this example, 3: 1 selectors 207 and 209, under control of controller 205, select the signal being added for transmission in the service bandwidth or the protection bandwidth on either transmission path 110 or transmission path 120.

It should be noted that. in this example. the normal transmission path for a digital signal being added at the ring node would be in the service bandwidth on transmission path 110 and transmission path 120. for example, towards the west (W). If there were to be a protection switch, the signal (T) being added from interface 224 would be bridged via broadcast element 226 and chosen by 3: 1 selector 207, under control of controller 205. to the protection bandwidth on transmission path 110. Similarly, if there were to be a loop-back protection switch and the ring node was adjacent to the failure, the signal (R) to be dropped at the ring node would be received in the protection bandwidth on transmission path 120 and would be switched from broadcast element 218 via 2: 1 selector 208 to interface 224. It is noted that "failure" or "ring node failure' as used herein is intended to include node equipment failure and "node isolation failure" caused by optical fiber cuts, cable cuts or the like. A node isolation failure is a failure where a group of one or more ring nodes appear to be failed since they are unreachable by other ring nodes in the ring transmission system because of other failed ring nodes or by fiber and/or cable cuts. If the transmission path for the signal (R) is the protection bandwidth, the signal (R) to be dropped would be switched in a ring node adjacent the failure from the protection bandwidth on transmission path 120 to the service bandwidth on transmission path 110 and received at the ring node in the usual fashion. Then, the signal (R) being dropped from transmission path 110 is supplied via broadcast element 206 and 2:1 selector 208 to interface 224.

As indicated above. controller 205 monitors the status of interface 224 and the digital signal supplied thereto via bus 227. Specifically, controller 205 monitors interface 224 for loss-of-signal, coding violations and the like, i.e., a signal failure condition. Under control of controller 205, digital signals may be passed through, added at, dropped at, bridged at or loop-back-switched at the ring node. A loop-back-switch of an STS-M digital signal incoming in the service bandwidth on transmission path 110 is effected by . controller 205 causing 3:1 selector 209 to select the STS-M digital signal from broadcast element 206 and supplying it via squelcher (S) 219 to transmitter 220. In turn, transmitter 220 supplies an OC-N optical signal to the protection bandwidth on transmission path 120. It will be apparent that in the loop-back-switch operation, if the signal is incoming in a service bandwidth on transmission path 110, it will be loop-back-switched to the protection bandwidth on transmission path 120 and vice versa. If the signal is incoming in protection bandwidth on transmission path 110, it will be loop-back-switched to the service bandwidth on transmission path 120 and vice versa. A signal to be added at the ring node is supplied from interface 224, replicated via broadcast element 226 and selected either by 3:1 selector 207 or 3: 1 selector 209, under control of controller 205, to be added on transmission path 110 or transmission path 120, respectively. A digital signal to be dropped at the ring node is selected by 2:1 selector 208, under control of controller 205, either from broadcast element 206 (transmission path 110) or broadcast element 218 (transmission path 120). The pass-through and loop-back-switch functions for a signal incoming on transmission path 120 is identical to that for an incoming signal on transmission path 110.

Possible communications circuit misconnections are avoided in bidirectional line-switched ring 100 by deterministically squelching particular communications circuits active in a particular ring node using a generalized deterministic squelching method which is described in detail below. To this end, each ring node in bidirectional line-switched ring transmission system 100 is typically equipped to effect the desired squelching via squelchers (S) 204, 210, 217 and 219, under control of controller 205. In this example, both incoming and outgoing communications circuits are squelched, however. it may only be necessary to squelch outgoing communications circuits.

FIG. 3 shows, in simplified block diagram form, details of an exemplary squelcher (S) unit. Specifically, the STS-M digital signal is supplied to demultiplexer (DEMUX) 301 where it is demultiplexed into its constituent M STS-1 digital signals 302-1 through 302-M. The M STS-1 digital signals are supplied on a one-to-one basis to AIS insert units 303-1 through 303-M. AIS insert units 303-1 through 303-M, under control of controller 205, insert the AIS in the STS-1 digital signals included in the communications circuits, i.e., STS-M digital signals, to be squelched. Details of AIS insert units 303 are shown in FIG. 4 and described below. Thereafter, the M STS-1 digital signals are multiplexed in multiplexer (MUX) 304 to yield the desired STS-M digital signal. The details of multiplex schemes for the STS-M digital signal are described in the technical advisory TA-NWT-000253, noted above.

FIG. 4 shows, in simplified block diagram form, details of AIS insert units 303. Specifically. shown is a STS-1 digital signal being supplied to AIS generator 401 and to one input of 2:1 selector 402. AIS generator 401 operates to insert AIS in the STS-1 digital signal. As indicated in the technical advisory TA-NWT-000253, the STS path AIS is an all ones (l's) signal in the STS-1 overhead bytes H1, H2 and H3 and the bytes of the entire STS SPE (synchronous payload envelope). Selector 402 selects as an output, under control of controller 205, either the incoming STS-1 digital signal or the STS-1 digital signal with AIS inserted from AIS generator 401.

Deterministic squelching is provided by a method where, despite ring node failures, a communications circuit is delivered to as many drops as possible so long as there is at least one source that has not failed. It will be shown below that a generalized squelching method can be derived from two rules that have been developed for basic unidirectional circuits. For both rules, it is assumed that the particular ring node of interest (i.e., that ring node used as the loop back switching ring node to heal the ring), is adjacent to a failed ring node. These rules are:
1) Assume, with respect to the switching ring node, that one or more failed ring nodes are in the direction of a unidirectional communications circuit (i.e., the failed ring nodes including the failed adjacent ring node are downstream from the switching ring node). Squelch the communications circuit, in the direction of the communications circuit. if and only if the ring node failure scenario includes the last exit ring node for the communications circuit. (The last exit ring node is the exit ring node that is furthest downstream from the switching ring node); and.
2) Assume. with respect to the switching ring node, that the failure is in the opposite direction from the direction of the unidirectional communications circuit (i.e., the failed ring nodes including the failed adjacent ring node are upstream from the switching ring node). Squelch the communications circuit, in the direction of the communications circuit, if and only if the ring node failure scenario includes the first entry ring node for the communications circuit. (The first entry ring node is the entry ring node that is furthest upstream from the switching ring node). Those skilled in the art will appreciate that rules 1) and 2) may be applied to unidirectional circuits having one or more sources and one or more drops. Accordingly. communications circuits falling under these rules include. for example. unidirectional communications circuits having a single source and a single drop, and communications circuits having various combinations of one or more sources, one or more drops, and/or multiple broadcasts. Also, it will be apparent that the combinations of rules 1) and 2) achieve the results provided by the known method for bidirectional squelching of simple bidirectional communications circuit at a given ring node when the communications circuit is terminated at a failed ring node. For the ring interworking scheme described in ANSI T1X1.5/91-043, the bidirectional interworking circuit can be viewed as a multiply dropped circuit with two drops (drop and continue) which is multiply sourced with two sources in the other direction. Thus, the combination of rules 1) and 2) also achieve the results provided by the known squelching method for ring interworking. However, the squelching method of the present invention is not limited to simple bidirectional communications circuits or ring interworking schemes since it generalized to govern deterministic squelching for other circuit types as well. Thus, practicing the squelching method of the present invention is advantageous since a greater variety of communications services can now be provided for in the context of conventional ring transmission system architecture design.

FIG. 5 is a flow chart illustrating the operation of controller 205 in controlling the ring nodes in order to effect the deterministic squelching of communications circuits in the presence of ring node failures, in accordance with the rules discussed above. The process is entered via step 501. Then, operational block 502 causes the K bytes of an incoming OC-N signal to be observed and processes the ring node IDs therein. Then, conditional branch point 503 tests to determine if the processed ring node IDs indicate that one or more ring nodes have failed. Again. a ring node failure is defined as to include ring node equipment failure and node isolation failure caused by fiber cuts and the like. Specific examples of failure conditions are discussed below. Thus, if the processed ring node IDs indicate no ring node failure, the failure is other than a ring node and operational block 513 causes the usual bidirectional ring bridging and switching to be effected as appropriate. Thereafter, the process is ended via step 514. If the processed ring node IDs indicate one or more ring node failures, operational block 506 causes the failed ring node IDs to be identified. Then, control is passed to operational block 507 which allows the identification of communications circuits potentially affected by the one or more failure. A communications circuit is potentially affected by the failure if it has an entry and/or exit (i.e., an "A" and/or "Z" termination) in the one or more failed ring nodes. However, as discussed above, squelching does not have to be performed simply because a communications circuit has a termination in a failed ring node. Thus, the process continues by going to conditional branching point 508. If the ring node failure scenario does not include a ring node adjacent to the switching ring node, then no squelching is performed, and the usual bridging and switching may occur as appropriate in operational block 513. If the failure scenario includes an adjacent ring node, then control is passed to conditional branching point 509. If the failed adjacent ring node is upstream from the switching ring node then control is passed to operational block 510. If an entry ring node for a communications circuit which is furthest upstream from the switching ring node has failed, then control is passed to operational block 512 where the communications circuit is squelched. If the furthest upstream entry ring node has not failed then control is passed to conditional branching point 511. Referring back to conditional branching point 509, if the failed adjacent ring node is downstream from the switching ring node, then control is passed to conditional branching point 511. If an exit ring node for a communications circuit which furthest downstream from the switching ring.node has failed. then control is passed to operational block 512 where the communications circuit is squelched. If the furthest downstream exit ring node has not failed then the usual bridging and switching may occur as appropriate in operational block 513. Thereafter, the process is ended in step 514. In block 506 in FIG. 5, the steps of identifying failed ring nodes and identifying affected active communications circuits may be performed, for example, by using a ring "maps," or look-up tables, which are stored in each ring node in the system, in combination with line-switch request messages generated by the ring nodes. The ring maps could include, for example, information regarding the order in which ring nodes appear on the ring and ring node addresses at which each communications circuit enters and exits the ring. As discussed above, a given communications circuit may have multiple sources and multiple drops which implies multiple entry and exit ring node addresses. STS time slot information may also be included in the maps where appropriate. One example of the use of ring maps and line-switch request messages to identify failed ring nodes follows. Suppose a segment of a ring consisting of three ring nodes A. B. and C is observed. where B has failed. In a typical scenario, both A and C will send line-switch request messages in the APS channel K1 byte destined for B. When A sees the request from C, fails to receive a signal from B (i.e., A detects a loss-of-signal). and sees that B is between A and C (using the ring map), it can determine that B is isolated from the ring. A and C will then use their respective ring maps, and apply rules 1) and 2) above, to determine which communications circuits are affected by the failure of B, and squelch those affected circuits by inserting AIS, as described above, to thereby avoid misconnections. A second example of the use of ring maps. loss-of-signal information. and line-switch request messages to identify failed ring nodes is given in my co-pending application serial number 07/855,782, (US-A-5442620). In this second example, rules 1) and 2), are not applied to determine whether a particular communications circuit is affected by the ring node failures. Instead, communications circuits are simply squelched if they have a termination in a failed adjacent ring node. However, those skilled in the art will appreciate that the described signaling is readily applicable to the present invention as an example of how the identification step in operational block 506 in FIG. 5 may be performed.

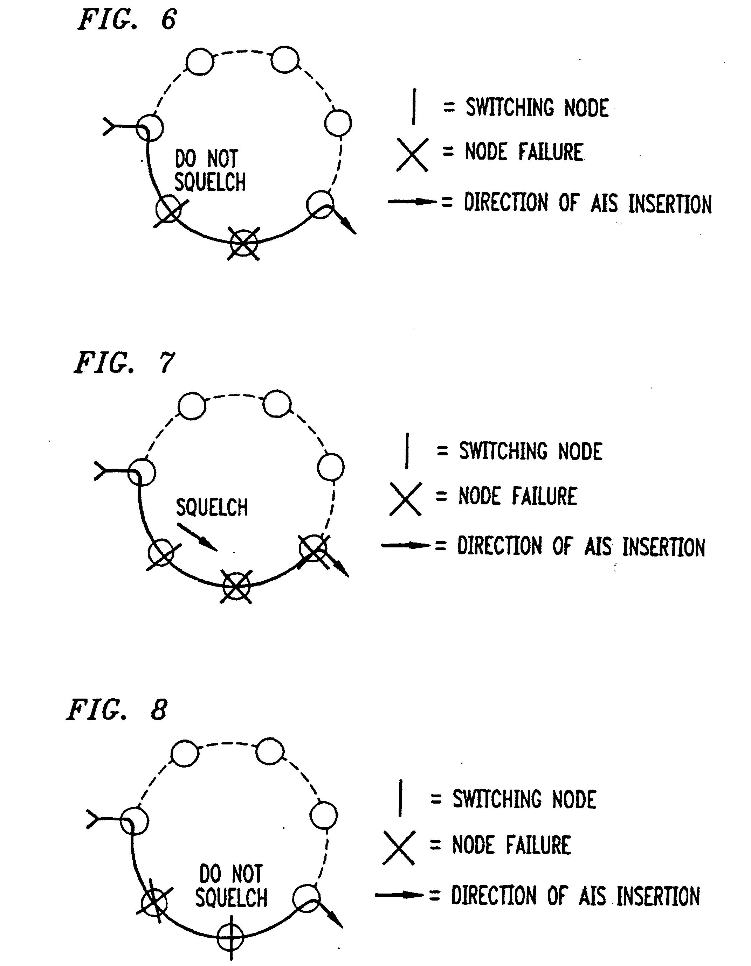

FIGs. 6-22 illustrate examples of the operations of the generalized squelching rules discussed above.

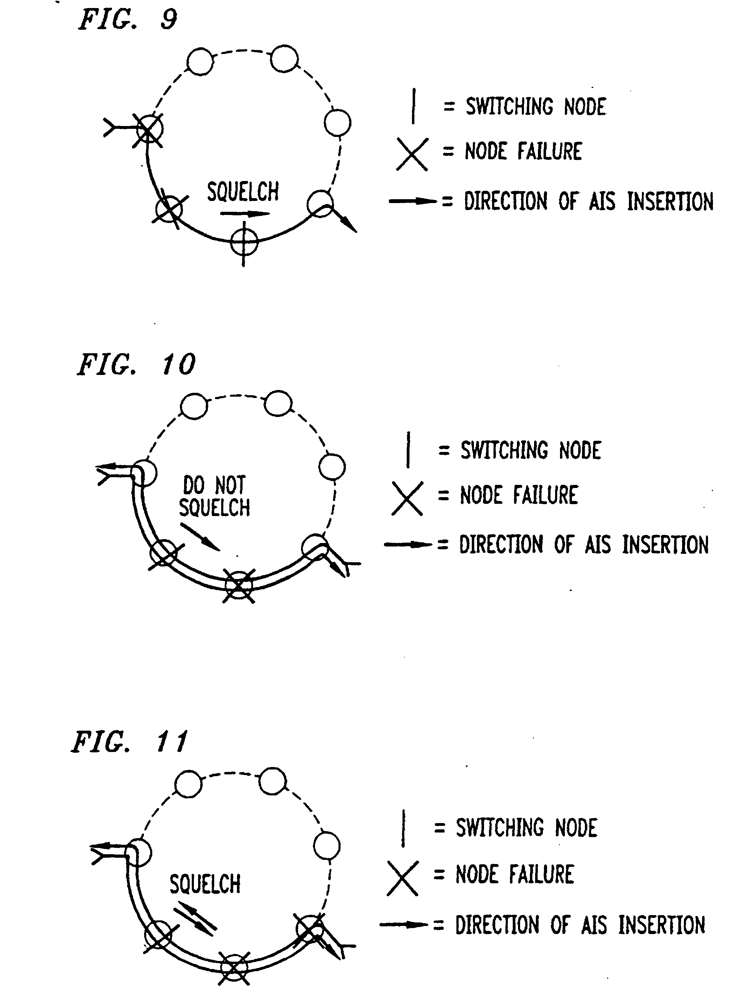

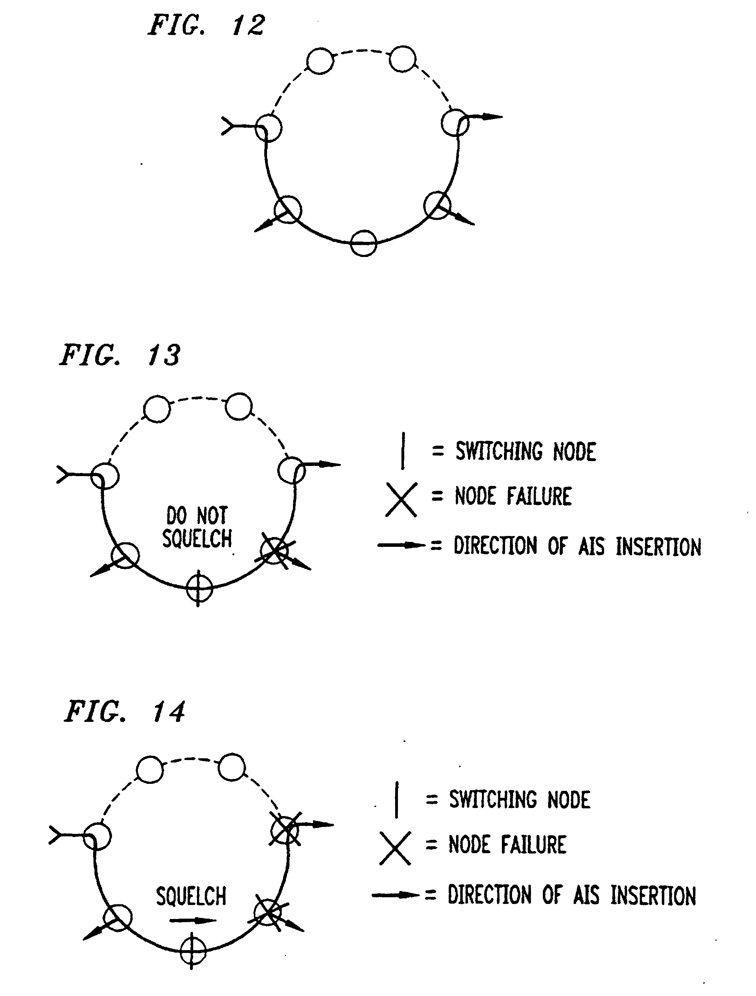

FIGs. 6-9 show a unidirectional circuit having a single entry ring node and a single exit ring node. In FIGs. 6 and 7, the downstream ring node adjacent to the switching ring node has failed. In FIG. 6, no squelching is performed because, in accordance with rule 1) above, the single exit ring node, which by definition is the exit ring node furthest downstream from the switching ring node, has not failed. In FIG. 7, squelching is performed because the exit ring node has failed. In FIGs. 8 and 9, the upstream ring node adjacent to the switching ring node has failed. In FIG. 8, no squelching is performed because. in accordance with rule 2) above, the single entry ring node, which by definition is the entry ring node furthest upstream from the switching node, has not failed. In FIG. 9, squelching is performed because the entry ring node has failed. As noted above, the combination of rules 1) and 2) give the known method for squelching simple bidirectional communications circuits, which is illustrated in FIGs. 10 and 11.

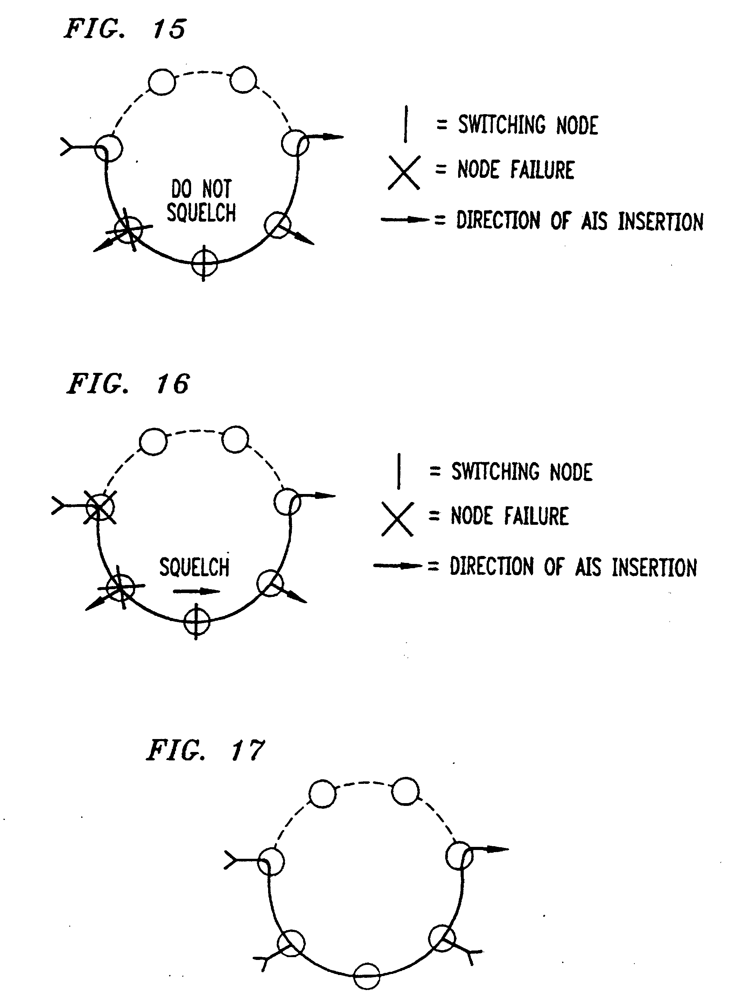

FIG. 12 shows a multiply dropped unidirectional circuit. As discussed above, the generalized squelching method provides for delivery to as many drops as possible despite ring node failures. Referring now to FIGs. 13 and 14, the downstream ring node adjacent to the switching ring node has failed. In FIG. 13, no squelching is performed because. in accordance with rule 1) above, the exit ring node furthest downstream from the switching ring node has not failed. In FIG. 14. squelching is performed because the exit ring node furthest downstream from the switching ring node has failed. FIGs. 15 and 16 show that the upstream ring node adjacent to the switching ring node has failed. In FIG. 15, no squelching is performed because, in accordance with rule 2) above, the entry ring node furthest upstream from the switching ring node has not failed. In FIG. 16. squelching is performed because the entry ring node furthest upstream from the switching ring node has failed.

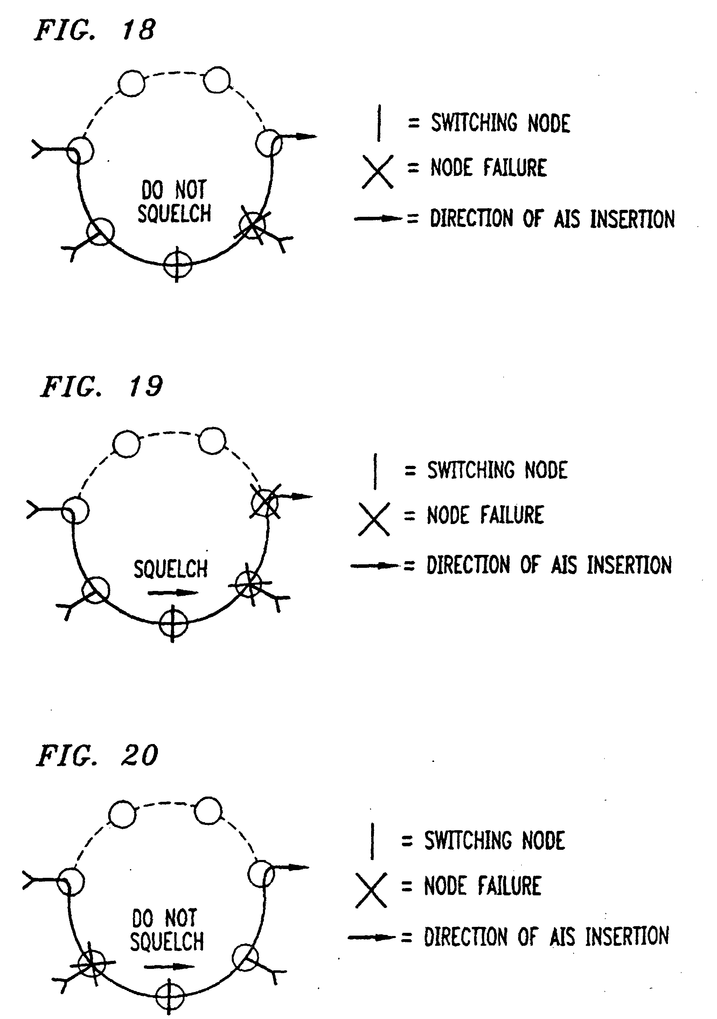

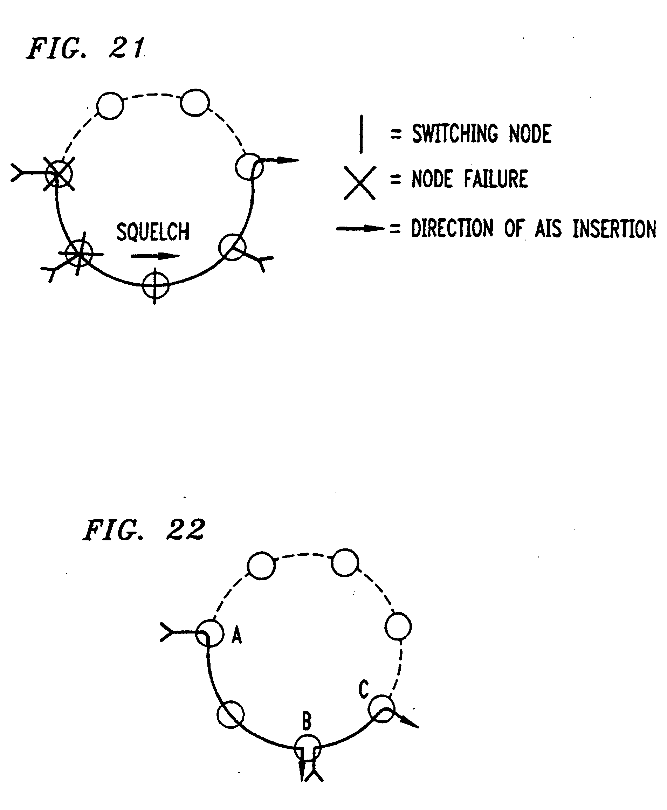

FIG. 17 shows a multiply sourced unidirectional circuit. As above, the intent of the squelching method is to deliver the communications circuit so long as there is at least one source that has not failed. Referring now to FIGs. 18 and 19, the downstream ring node adjacent to the switching ring node has failed. In FIG. 18, squelching is not performed because, in accordance with rule 1) above, the exit ring node furthest downstream from the switching ring node has not failed. In FIG. 19, squelching is performed because the exit ring node furthest downstream from the switching ring node has failed. FIGs. 20 and 21 show that the upstream ring node adjacent to the switching ring node has failed. In FIG. 20, no squelching is performed because, in accordance with rule 2) above, the entry ring node furthest upstream from the switching ring node has not failed. In FIG. 21, squelching is performed because the entry ring node furthest upstream from the switching ring node has failed.

FIG. 22 shows another example of the generalized squelching method, FIG. 22 shows two simple unidirectional circuits. Assume that both use the same tributary timeslot. Using rules 1) and 2) above, if ring node B fails, both circuits are squelched. Now suppose that FIG. 22 represents a variation of ring interworking where two unidirectional circuits occupy the same timeslot. Suppose, therefore, that it is desirable to permit a secondary connection during the failure of ring node B (as is the case in ring interworking). Now squelching is only dependent on A and C and not B. If ring node B fails. the circuits are not squelched and a secondary connection is permitted from A to C. It is evident from the two examples illustrated by FIG. 22 that the service intent is needed in order to determine how to squelch. Merely knowing the entry and exit ring nodes is not sufficient in special cases such as these.

The above-described arrangements are. of course, merely illustrative of the application of the principles of the invention. Other arrangements may be devised by those skilled in the art without departing from the scope of the invention. For example, other arrangements may equally be employed to realize the desired squelching of the communications circuits. The squelching may be realized, for example, by simply not bridging or loop-back-switching the communications circuits.

## Claims

1. A method for use with a predetermined ring node (104) of a plurality of ring nodes (101-104) in a ring transmission system (100), said ring transmission system transporting communications circuits having at least one entry ring node (103) and at least one exit ring node (101), said predetermined ring node including controller means (205) adapted to be provisioned with the identities of all active communications circuits in the predetermined ring node, and means (205) adapted to store identities of ring nodes in the ring transmission system, the method including the steps of:
a) detecting and identifying (205, 502, 503, 506) failed ring nodes in said ring transmission system including locations of said failed ring nodes in said ring transmission system relative to said predetermined ring node by monitoring (205) signals incoming to said predetermined ring node, said monitoring including detecting (205) a signal failure condition, including detecting at least one switch request message, incoming to said predetermine ring node on either a first (110) or a second (120) transmission path, said first transmission path (110) coupling said plurality of ring nodes and transporting communications circuits around said ring transmission system in a first direction, and said second transmission path (120) coupling said plurality of ring nodes and transporting communications circuits around said ring transmission system in a second direction opposite said first direction; and
b) detecting and identifying communications circuits active in said predetermined ring node;
the method being **CHARACTERIZED BY**
c) squelching (205, 204, 210, 217, 219, 512) an active communications circuit in said predetermined ring node in response to said identifications in steps a) and b) if
a first ring node (101 or 103, 508, 509) that is downstream from, and adjacent to, said predetermined ring node on either said first or said second transmission path has failed, and
an exit ring node (101, 102 or 103, 509, 511) of one or more exit ring nodes for said active communications circuit to be squelched, which is furthest downstream from said predetermined ring node has failed; and
d) if no squelching is performed on said active communications circuit in accordance with step c), then squelching (205, 204, 210, 217, 219, 512) said active communications circuit in said predetermined ring node if a second ring node (508, 509) that is upstream from, and adjacent to, said predetermined ring node has failed, and
an entry node (510) of one or more entry ring nodes for said active communications circuit, to be squelched, which is furthest upstream from said predetermined ring node has failed,
wherein possible communications circuit misconnections are avoided.

2. A method as claimed in claim 1 wherein said step of detecting and identifying failed ring nodes is responsive to said stored identities of ring nodes in said transmission system and said detected at least one switch request message to identify failed ring nodes from said stored identities (205).

3. A method as claimed in claim 2 wherein said at least one switch request message is transported (205, 212, 221) in an automatic protection switch channel in said protection bandwidth of both said first and second transmission paths.

4. A method as claimed in claim 1 wherein said squelching steps (205, 204, 512) include blocking transmission of said communications circuit to be squelched.

5. A method as claimed in claim I wherein said squelching steps include generating an alarm indication signal and inserting said alarm indication signal (205, 204, 303) in prescribed byte positions in said communications circuits to be squelched.

6. A method for use in deterministically squelching communications circuits (205, 204, 210, 217, 219, 512) in a ring transmission system (100) including a plurality of ring nodes (102-104), the method being a method as claimed in claim 1 wherein steps a) to d) are applied to at least one (104) of said plurality of ring nodes (101-104).

7. A ring node (104), said ring node being a predetermined ring node of a plurality of ring nodes (101-104) in a ring transmission system (100), said ring transmission system being adapted to transport communications circuits having at least one entry ring node and at least one exit ring node, said predetermined ring node including controller means (205) adapted to be provisioned with the identities of all active communications circuits in the predetermined ring node, and means (205) adapted to store identities of ring nodes in the ring transmission system, said predetermined ring node including:
a) means (205, 502, 503, 506) adapted to detect and identify failed ring nodes in said ring transmission system including locations of said failed ring nodes, said means adapted to detect and identify including means (205) adapted to monitor signals incoming to said predetermined ring node, said means adapted to monitor including means (205) adapted to detect a signal failure condition, including means adapted to detect at least one switch request message, incoming to said predetermine ring node on either a first (110) or a second (120) transmission path, said first transmission path (110) being adapted to couple said plurality of ring nodes and to transport communications circuits around said ring transmission system in a first direction, and said second transmission path (120) being adapted to couple said plurality of ring nodes and to transport communications circuits around said ring transmission system in a second direction opposite said first direction; and
b) means (205) adapted to detect and identify communications circuits active in said predetermined ring node;
said predetermined ring node being **CHARACTERIZED BY**
c) at least one means (205, 204, 210, 217, 219, 512) adapted to squelch an active communications circuit in said predetermined ring node in response to said identifications in a) and b) if
a first ring node (e.g., 101 or 103, 508, 509) that is downstream from, and adjacent to, said predetermined ring node on either said first or said second transmission path has failed, and
an exit ring node (101, 102, or 103, 509, 511) of one or more exit ring nodes for said active communications circuit to be squelched, which is furthest downstream from said predetermined ring node has failed, and
d) means adapted to, if no squelching is performed on said active communications circuit in accordance with c), squelch (205, 204, 210, 217, 219, 512) said active communications circuit in said predetermined ring node if
a second ring node that is upstream from, and adjacent to, said predetermined ring node has failed (508, 509), and
an entry ring node (510) of one or more entry ring nodes tor said active communication circuit to be squelched, which is furthest upstream from said predetermined ring node has failed,
wherein possible communications circuit misconnections are avoided.

8. A ring node as claimed in claim 7 wherein said means adapted to detect and identify failed ring nodes is responsive to said stored identities of ring nodes in said transmission system and said detected at least one switch request message to identify failed ring nodes from said stored identities (205).

9. A ring node as claimed in claim 8 including means adapted to supply said at least one switch request message to be transported (205, 212, 221) in an automatic protection switch channel in said protection bandwidth of both said first and second transmission paths.

10. A ring node as claimed in claim 7 wherein said at least one means adapted to squelch is adapted to block (205, 204, 512) transmission of said communications circuit to be squelched.

11. A ring node as claimed in claim 7 wherein said at least one means adapted to squelch (205. 204, 303) is adapted to generate an alarm indication signal and to insert said alarm indication signal in prescribed byte positions in said communications circuit to be squelched.

## Patentansprüche

1. Verfahren zur Verwendung mit einem vorbestimmten Ringknoten (104) einer Vielzahl von Ringknoten (101-104) in einem Ringübertragungssystem (100), wobei das Ringübertragungssystem Verbindungszüge mit mindestens einem Eintrittsringknoten (103) und mindestens einem Austrittsringknoten (101) transportiert, wobei der vorbestimmte Ringknoten ein Steuerungsmittel (205), das so ausgelegt ist, daß es mit den Identitäten aller aktiven Verbindungszüge in dem vorbestimmten Ringknoten ausgestattet ist, und ein Mittel (205), das so ausgelegt ist, daß es Identitäten von Ringknoten in dem Ringübertragungssystem speichert, enthält, wobei das Verfahren die folgenden Schritte umfaßt:
a) Erkennen und Identifizieren (205, 502, 503, 506) ausgefallener Ringknoten in dem Ringübertragungssystem einschließlich Positionen der ausgefallenen Ringknoten in dem Ringübertragungssystem relativ zu dem vorbestimmten Ringknoten durch Überwachen (205) von an dem vorbestimmten Ringknoten ankommenden Signalen, wobei das Überwachen das Erkennen (205) eines Signalausfallzustands umfaßt, einschließlich des Erkennens mindestens einer Vermittlungsanforderungsnachricht, die an dem vorbestimmten Ringknoten entweder auf einem ersten (110) oder einem zweiten (120) Übertragungsweg ankommt, wobei der erste Übertragungsweg (110) die Vielzahl von Ringknoten koppelt und Verbindungszüge in einer ersten Richtung in dem Ringübertragungssystem transportiert und der zweite Übertragungsweg (120) die Vielzahl von Ringknoten koppelt und Verbindungszüge in einer der ersten Richtung entgegengesetzten zweiten Richtung in dem Ringübertragungssystem transportiert; und
b) Erkennen und Identifizieren von in dem vorbestimmten Ringknoten aktiven Verbindungszügen;
wobei das Verfahren durch folgendes **gekennzeichnet** ist:
c) Squelchen (205, 204, 210, 217, 219, 512) eines aktiven Verbindungszugs in dem vorbestimmten Ringknoten als Reaktion auf die Identifikationen in den Schritten a) und b), wenn
ein erster Ringknoten (101 oder 103, 508, 509), der entweder auf dem ersten oder auf dem zweiten Übertragungsweg signalabwärts von und neben dem vorbestimmten Ringknoten gelegen ist, ausgefallen ist, und
ein Austrittsringknoten (101, 102 oder 103, 509, 511) eines oder mehrerer Austrittsringknoten für den zu squelchenden aktiven Verbindungszug, der am weitesten signalabwärts von dem vorbestimmten Ringknoten gelegen ist, ausgefallen ist; und
d) wenn kein Squelchen an dem aktiven Verbindungszug gemäß Schritt c) durchgeführt wird, Squelchen (205, 204, 210, 217, 219, 512) des aktiven Verbindungszugs in dem vorbestimmten Ringknoten, wenn ein zweiter Ringknoten (508, 509), der signalaufwärts von und neben dem vorbestimmten Ringknoten gelegen ist, ausgefallen ist, und
ein Eintrittsknoten (510) von einem oder mehreren Eintrittsringknoten für den zu squelchenden aktiven Verbindungszug, der am weitesten signalaufwärts von dem vorbestimmten Ringknoten gelegen ist, ausgefallen ist,
wobei mögliche Verbindungszugfehlverbindungen vermieden werden.

2. Verfahren nach Anspruch 1, wobei der Schritt des Erkennens und Identifizierens ausgefallener Ringknoten auf die gespeicherten Identitäten von Ringknoten in dem Übertragungssystem und die erkannte mindestens eine Vermittlungsanforderungsnachricht reagiert, um ausgefallene Ringknoten aus den gespeicherten Identitäten (205) zu identifizieren.

3. Verfahren nach Anspruch 2, wobei die mindestens eine Vermittlungsanforderungsnachricht in einem Automatikschutzvermittlungskanal in der Schutzbandbreite sowohl des ersten als auch des zweiten Übertragungswegs transportiert (205, 212, 221) wird.

4. Verfahren nach Anspruch 1, wobei die Squelchschritte (205, 204, 512) das Blockieren der Übertragung der zu squelchenden Verbindungszugs umfassen.

5. Verfahren nach Anspruch 1, wobei die Squelchschritte das Erzeugen eines Warnanzeigesignals und das Einfügen des Warnanzeigesignals (205, 204, 303) in vorgeschriebene Bytepositionen in den zu squelchenden Verbindungszügen umfassen.

6. Verfahren zur Verwendung beim deterministischen Squelchen von Verbindungszügen (205, 204, 210, 217, 219, 512) in einem Ringübertragungssystem (100) mit einer Vielzahl von Ringknoten (101-104), wobei das Verfahren ein Verfahren nach Anspruch 1 ist, wobei die Schritte a) bis d) auf mindestens einen (104) der Vielzahl von Ringknoten (101-104) angewandt werden.

7. Ringknoten (104), wobei der Ringknoten ein vorbestimmter Ringknoten einer Vielzahl von Ringknoten (101-104) in einem Ringübertragungssystem (100) ist, wobei das Ringübertragungssystem so ausgelegt ist, daß es Verbindungszüge mit mindestens einem Eintrittsringknoten und mindestens einem Austrittsringknoten transportiert, wobei der vorbestimmte Ringknoten ein Steuerungsmittel (205), das so ausgelegt ist, daß es mit den Identitäten aller aktiven Verbindungszüge in dem vorbestimmten Ringknoten ausgestattet ist, und ein Mittel (205), das so ausgelegt ist, daß es Identitäten von Ringknoten in dem Ringübertragungssystem speichert, enthält, wobei der vorbestimmte Ringknoten folgendes enthält:
a) Mittel (205, 502, 503, 506), die so ausgelegt sind, daß sie ausgefallene Ringknoten in dem Ringübertragungssystem einschließlich Positionen der ausgefallenen Ringknoten erkennen und identifizieren, wobei die Mittel, die so ausgelegt sind, daß sie erkennen und identifizieren, ein Mittel (205) enthalten, daß so ausgelegt ist, daß es an dem vorbestimmten Ringknoten ankommende Signale überwacht, wobei das Mittel, daß so ausgelegt ist, daß es überwacht, ein Mittel (205) enthält, daß so ausgelegt ist, daß es einen Signalausfallzustand erkennt, einschließlich eines Mittels, das so ausgelegt ist, daß es mindestens eine Vermittlungsanforderungsnachricht erkennt, die an dem vorbestimmten Ringknoten entweder auf einem ersten (110) oder einem zweiten (120) Übertragungsweg ankommt, wobei der erste Übertragungsweg (110) so ausgelegt ist, daß er die Vielzahl von Ringknoten koppelt und Verbindungszüge in einer ersten Richtung in dem Ringübertragungssystem transportiert, und der zweite Übertragungsweg (120) so ausgelegt ist, daß er die Vielzahl von Ringknoten koppelt und Verbindungszüge in einer der ersten Richtung entgegengesetzten zweiten Richtung in dem Ringübertragungssystem transportiert; und
b) ein Mittel (205), das so ausgelegt ist, daß es in dem vorbestimmten Ringknoten aktive Verbindungszüge erkennt und identifiziert;
wobei der vorbestimmte Ringknoten durch folgendes **gekennzeichnet** ist:
c) mindestens ein Mittel (205, 204, 210, 217, 219, 512), das so ausgelegt ist, daß es einen aktiven Verbindungszug in dem vorbestimmten Ringknoten als Reaktion auf die Identifikationen in a) und b) squelcht, wenn
ein erster Ringknoten (z.B. 101 oder 103, 508, 509), der entweder auf dem ersten oder auf dem zweiten Übertragungsweg signalabwärts von und neben dem vorbestimmten Ringknoten gelegen ist, ausgefallen ist, und
ein Austrittsringknoten (101, 102 oder 103, 509, 511) eines oder mehrerer Austrittsringknoten für den zu squelchenden aktiven Verbindungszug, der am weitesten signalabwärts von dem vorbestimmten Ringknoten gelegen ist, ausgefallen ist; und
d) ein Mittel, das so ausgelegt ist, daß es, wenn kein Squelchen an dem aktiven Verbindungszug gemäß c) durchgeführt wird, den aktiven Verbindungszug in dem vorbestimmten Ringknoten squelcht, wenn
ein zweiter Ringknoten, der signalaufwärts von und neben dem vorbestimmten Ringknoten gelegen ist, ausgefallen ist (508, 509), und
ein Eintrittsringknoten (510) von einem oder mehreren Eintrittsringknoten für den zu squelchenden aktiven Verbindungszug, der am weitesten signalaufwärts von dem vorbestimmten Ringknoten gelegen ist, ausgefallen ist,
wobei mögliche Verbindungszugfehlverbindungen vermieden werden.

8. Ringknoten nach Anspruch 7, wobei das Mittel, das so ausgelegt ist, daß es ausgefallene Ringknoten erkennt und identifiziert, auf die gespeicherten Identitäten von Ringknoten in dem Übertragungssystem und die erkannte mindestens eine Vermittlungsanforderungsnachricht reagiert, um ausgefallene Ringknoten aus den gespeicherten Identitäten (205) zu identifizieren.

9. Ringknoten nach Anspruch 8 mit einem Mittel, das so ausgelegt ist, daß es die mindestens eine Vermittlungsanforderungsnachricht für einen Transport (205, 212, 221) in einem Automatikschutzvermittlungskanal in der Schutzbandbreite sowohl des ersten als auch des zweiten Übertragungswegs zuführt.

10. Ringknoten nach Anspruch 7, wobei das mindestens eine Mittel, das so ausgelegt ist, daß es squelcht, so ausgelegt ist, daß es die Übertragung des zu squelchenden Verbindungszugs blockiert (205, 204, 512).

11. Ringknoten nach Anspruch 7, wobei das mindestens eine Mittel, das so ausgelegt ist, daß es squelcht (205, 204, 303), so ausgelegt ist, daß es ein Warnanzeigesignal erzeugt und das Warnanzeigesignal in vorgeschriebene Bytepositionen in den zu squelchenden Verbindungszug einfügt.

## Revendications

1. Procédé destiné à être utilisé avec un noeud d'anneau prédéterminé (104) d'une pluralité de noeuds d'anneau (101 à 104) dans un système de transmission en anneau (100), ledit système de transmission en anneau transportant des circuits de communications ayant au moins un noeud d'anneau d'entrée (103) et au moins un noeud d'anneau de sortie (101), ledit noeud d'anneau prédéterminé comportant un moyen de contrôleur (205) adapté pour recevoir les identités de tous les circuits de communications actifs dans le noeud d'anneau prédéterminé, et un moyen (205) adapté pour mémoriser des identités de noeuds d'anneau dans le système de transmission en anneau, le procédé comportant les étapes de :
a) détection et identification (205, 502, 503, 506) de noeuds d'anneau défectueux dans ledit système de transmission en anneau y compris des positions desdits noeuds d'anneau défectueux dans ledit système de transmission en anneau par rapport audit noeud d'anneau prédéterminé en surveillant (205) les signaux entrant dans ledit noeud d'anneau prédéterminé, ladite surveillance comportant la détection (205) d'une condition de défaillance de signal, y compris la détection d'au moins un message de demande de commutation, arrivant audit noeud d'anneau prédéterminé sur l'un ou l'autre d'un premier (110) ou d'un deuxième (120) trajet de transmission, ledit premier trajet de transmission (110) couplant ladite pluralité de noeuds d'anneau et transportant des circuits de communications autour dudit système de transmission en anneau dans un premier sens, et ledit deuxième trajet de transmission (120) couplant ladite pluralité de noeuds d'anneau et transportant des circuits de communications autour dudit système de transmission en anneau dans un deuxième sens opposé audit premier sens ; et
b) détection et identification de circuits de communications actifs dans ledit noeud d'anneau prédéterminé ;
le procédé étant **CARACTÉRISÉ PAR**
c) le blocage automatique (205, 204, 210, 217, 219 512) d'un circuit de communications actif dans ledit noeud d'anneau prédéterminé en réponse auxdites identifications dans les étapes a) et b) si
un premier noeud d'anneau (101 ou 103, 508, 509) qui est en aval dudit noeud d'anneau prédéterminé, et adjacent à celui-ci, sur l'un ou l'autre dudit premier ou dudit deuxième trajet de transmission est défectueux, et
un noeud d'anneau de sortie (101, 102 ou 103, 509, 511) d'un ou de plusieurs noeuds d'anneau de sortie dudit circuit de communications actif devant être bloqué automatiquement, qui est le plus en aval dudit noeud d'anneau prédéterminé est défectueux ; et
d) si aucun blocage automatique n'est effectué sur ledit circuit de communications actif conformément à l'étape c), alors le blocage automatique (205, 204, 210, 217, 219, 512) dudit circuit de communications actif dans ledit noeud d'anneau prédéterminé si un deuxième noeud d'anneau (508, 509) qui est en amont dudit noeud d'anneau prédéterminé, et adjacent à celui-ci, est défectueux, et
un noeud d'entrée (510) d'un ou de plusieurs noeuds d'anneau d'entrée pour ledit circuit de communications actif devant être bloqué automatiquement qui est le plus en amont dudit noeud d'anneau prédéterminé est défectueux,
dans lequel d'éventuelles mauvaises connexions des circuits de communications sont évitées.

2. Procédé selon la revendication 1, dans lequel ladite étape de détection et d'identification de noeuds d'anneau défectueux est sensible auxdites identités mémorisées de noeuds d'anneau dans ledit système de transmission et audit au moins un message de demande de commutation détecté afin d'identifier des noeuds d'anneau défectueux à partir desdites identités mémorisées (205).

3. Procédé selon la revendication 2, dans lequel ledit au moins un message de demande de commutation est transporté (205, 212, 221) dans un canal de commutation de protection automatique dans ladite largeur de bande de protection des deux dits premier et deuxième trajets de transmission.

4. Procédé selon la revendication 1, dans lequel lesdites étapes de blocage automatique (205, 204, 512) comportent le blocage de la transmission dudit circuit de communications devant être bloqué automatiquement.

5. Procédé selon la revendication 1, dans lequel lesdites étapes de blocage automatique comportent la génération d'un signal d'indication d'alarme et l'insertion dudit signal d'indication d'alarme (205, 204, 303) dans des positions d'octets prescrites dans lesdits circuits de communications devant être bloqués automatiquement.

6. Procédé destiné à être utilisé dans le blocage automatique déterministe de circuits de communications (205, 204, 210, 217, 219, 512) dans un système de transmission en anneau (100) comportant une pluralité de noeuds d'anneau (102 à 104), le procédé étant un procédé tel que revendiqué à la revendication 1, dans lequel les étapes a) à d) sont appliquées à au moins l'un (104) de ladite pluralité de noeuds d'anneau (101 à 104 ) .

7. Noeud d'anneau (104), ledit noeud d'anneau étant un noeud d'anneau prédéterminé d'une pluralité de noeuds d'anneau (101 à 104) dans un système de transmission en anneau (100), ledit système de transmission en anneau étant adapté pour transporter des circuits de communications ayant au moins un noeud d'anneau d'entrée et au moins un noeud d'anneau de sortie, ledit noeud d'anneau prédéterminé comportant un moyen de contrôleur (205) adapté pour recevoir les identités de tous les circuits de communications actifs dans le noeud d'anneau prédéterminé, et un moyen (205) adapté pour mémoriser des identités de noeuds d'anneau dans le système de transmission en anneau, le noeud d'anneau prédéterminé comportant :
a) des moyens (205, 502, 503, 506) adaptés pour détecter et identifier des noeuds d'anneau défectueux dans ledit système de transmission en anneau y compris des positions desdits noeuds d'anneau défectueux, lesdits moyens adaptés pour détecter et identifier comportant un moyen (205) adapté pour surveiller les signaux entrant dans ledit noeud d'anneau prédéterminé, ledit moyen adapté pour surveiller comportant un moyen (205) adapté pour détecter une condition de défaillance de signal, y compris un moyen adapté pour détecter au moins un message de demande de commutation, arrivant audit noeud d'anneau prédéterminé sur l'un ou l'autre d'un premier (110) ou d'un deuxième (120) trajet de transmission, ledit premier trajet de transmission (110) étant adapté pour coupler ladite pluralité de noeuds d'anneau et transporter des circuits de communications autour dudit système de transmission en anneau dans un premier sens, et ledit deuxième trajet de transmission (120) étant adapté pour coupler ladite pluralité de noeuds d'anneau et transporter des circuits de communications autour dudit système de transmission en anneau dans un deuxième sens opposé audit premier sens ; et
b) un moyen (205) adapté pour détecter et identifier des circuits de communications actifs dans ledit noeud d'anneau prédéterminé ;
ledit noeud d'anneau prédéterminé étant **CARACTÉRISÉ PAR**
c) au moins un moyen (205, 204, 210, 217, 219, 512) adapté pour bloquer automatiquement un circuit de communications actif dans ledit noeud d'anneau prédéterminé en réponse auxdites identifications dans a) et b) si
un premier noeud d'anneau (p. ex. 101 ou 103, 508, 509) qui est en aval dudit noeud d'anneau prédéterminé, et adjacent à celui-ci, sur l'un ou l'autre dudit premier ou dudit deuxième trajet de transmission est défectueux, et
un noeud d'anneau de sortie (101, 102 ou 103, 509, 511) des un ou plusieurs noeuds d'anneau de sortie dudit circuit de communications actif devant être bloqué automatiquement, qui est le plus en aval dudit noeud d'anneau prédéterminé est défectueux ; et
d) un moyen adapté pour, si aucun blocage automatique n'est effectué sur ledit circuit de communications actif conformément à l'étape c), bloquer automatiquement (205, 204, 210, 217, 219, 512) ledit circuit de communications actif dans ledit noeud d'anneau prédéterminé si
un deuxième noeud d'anneau qui est en amont dudit noeud d'anneau prédéterminé, et adjacent à celui-ci, est défectueux (508, 509), et
un noeud d'anneau d'entrée (510) d'un ou de plusieurs noeuds d'anneau d'entrée pour ledit circuit de communications actif devant être bloqué automatiquement , qui est le plus en amont dudit noeud d'anneau prédéterminé est défectueux,
dans lequel d'éventuelles mauvaises connexions des circuits de communications sont évitées.

8. Noeud d'anneau selon la revendication 7, dans lequel ledit moyen adapté pour détecter et identifier des noeuds d'anneau défectueux est sensible auxdites identités mémorisées de noeuds d'anneau dans ledit système de transmission et audit au moins un message de demande de commutation détecté afin d'identifier des noeuds d'anneau défectueux à partir desdites identités mémorisées (205).

9. Noeud d'anneau selon la revendication 8, comportant un moyen adapté pour fournir ledit au moins un message de demande de commutation à transporter (205, 212, 221) dans un canal de commutation de protection automatique dans ladite largeur de bande de protection des deux dits premier et deuxième trajets de transmission.

10. Noeud d'anneau selon la revendication 7, dans lequel ledit au moins un moyen adapté pour bloquer automatiquement est adapté pour bloquer (205, 204, 512) la transmission dudit circuit de communications devant être bloqué automatiquement.

11. Noeud d'anneau selon la revendication 7, dans lequel ledit au moins un moyen adapté pour bloquer automatiquement (205, 204, 303) est adapté pour générer un signal d'indication d'alarme et pour insérer ledit signal d'indication d'alarme dans des positions d'octets prescrites dans ledit circuit de communication devant être bloqué automatiquement.
